# EUROPEAN PATENT SPECIFICATION

(11) **EP 1 671 547 B1**
(45) Date of publication and mention of the grant of the patent: **10.09.2008**
(21) Application number: 05077837.2
(22) Date of filing: 09.12.2005
(51) Int. Cl.: A23B 7/154

(54) **Method for inhibiting cap opening and/or browning in edible fungi**
Verfahren zur Hemmung der Hutföffnung und/oder der Bräunung von essbaren Pilzen
Procédé d'inhibition d'ouverture de chapeau et/ou de brunissement de champignons comestibles

(30) Priority: 14.12.2004 NL 1027741
(43) Date of publication of application: 21.06.2006
(73) Proprietor: Denka International Holding B.V., 3771 NG Barneveld (NL)
(72) Inventor: Den Braber, Antonie Arie, 3844 GC Harderwijk (NL); Moskal, Janusz Ryszard, 3871 CE Hoevelaken (NL)
(74) Representative: de Lang, Robbert-Jan

(56) References cited:
- WO-A-03/001923
- US-A- 4 280 934
- US-A- 5 344 637
- PATENT ABSTRACTS OF JAPAN vol. 1996, no. 12, 26 December 1996 (1996-12-26) -& JP 08 205768 A (SNOW BRAND MILK PROD CO LTD), 13 August 1996 (1996-08-13)
- PATENT ABSTRACTS OF JAPAN vol. 004, no. 101 (C-019), 19 July 1980 (1980-07-19) -& JP 55 064748 A (AJINOMOTO CO INC), 15 May 1980 (1980-05-15)
- PATENT ABSTRACTS OF JAPAN vol. 015, no. 076 (C-0809), 21 February 1991 (1991-02-21) -& JP 02 299542 A (NIPPON KAYAKU CO LTD), 11 December 1990 (1990-12-11)
- PATENT ABSTRACTS OF JAPAN vol. 2003, no. 12, 5 December 2003 (2003-12-05) -& JP 2003 339310 A (TOYO SEIKAN KAISHA LTD), 2 December 2003 (2003-12-02)

## Description

The present invention relates to a method for inhibiting degradation such as cap opening and/or browning in edible fungi.

In practice it is found that most consumers have a definite opinion about how edible, fungi should look. Thus the consumer wants mushrooms to be white In colour and intact, for example, and at the time of purchase the cap of the mushroom must not actually have opened. Although to some extent mushrooms that have turned brown with a (partially) opened cap may still be very good to eat, the sales value of such mushrooms falls considerably, or such mushrooms are even unsaleable. Since most species of harvested fungi can only be kept for a short time before cap opening and browning occurs, this means that the distance over which the fungi can be transported must be kept relatively short and that the time of harvesting cannot be chosen arbitrarily. In practice, moreover, it is found that unsaleable mushrooms are a considerable loss item for greengrocers and (super)markets.

In practice one tries to inhibit the cap opening and browning of fungi by refrigerated storage and transport of the fungi. This entails extra costs, however, and in addition it is found that the cap opening and browning of the fungi cannot be satisfactorily prevented by refrigerated storage and transport alone.

JP08205768 describes the use of thymol for inhibiting browning of mushrooms. JP55064748 describes the use of phytic acid to give processed mushrooms, e.g., bottled, caned or wrapped mushrooms. WO 03/001923 describes the use of sodium erythorbate, erythorbic acid, ascorbic acid, calcium ascorbate and L-cysteine as browning inhibitors. JP02299542 describes the use of chlorate or hypochlorite for the treatment of mushrooms. JP2003339310 describes blanching of mushrooms using oil and fat for preventing browning of mushrooms.

It is thus an object of the present invention to provide a method by which the cap opening and/or browning of fungi can be inhibited to a greater degree.

It is a further object of the present invention to provide an alternative method for inhibiting degradation such as cap opening and browning of fungi, in particular of mushrooms.

This object is achieved by the present invention by a method for inhibiting cap opening and/or browning in edible fungi, in particular In mushrooms, the method involving the treatment of the fungi with one or more compounds chosen from the group which consists of: cy-ciopentylacetic acid (I), 2-cyclopentene-1-acetic acid (II), methyl-2-cyclopentene-1-acetic acid (III), isopropyl-cyclopentene-1-acetate (IV), ethyl-2-oxocyclopentane-carboxylate (V), methylcyclopentylideneacetate (VI), an isomeric mixture (VII) of cyclopentylideneacetic acid (VI-Ia) and 1-cyclopentene-1-acetic acid (VIIb), methyl-2-cyclohexene-1-acetate (VIII), or a combination.thereof.

It has surprisingly been found that said compounds give very favourable results in the inhibition of cap opening and browning of fungi.

These type of compounds has been described in US 5,344,637 and US4,280,934.

The person skilled in the art will quickly understand that the treatment of the fungi can be carried out in many different ways. Thus the fungi, prior to the harvesting thereof, can be sprayed or nebulized with a solution which contains one or more of said compounds. A solution of said compounds can also be poured into the cultivation bed of the fungi, for example. It is also self-evident that in addition to or instead thereof the fungi can also be treated after harvesting. As an example, the harvested fungi can be kept in a package which is provided with a source of one or more of said compounds.

Especially favourable results are obtained when the compound is chosen from methylcyclopentylidene acetate (VI) and methyl-2-cyclohexene-1-acetate (VIII), or a combination thereof.

According to the present invention it is in particular preferable that the treatment takes place by: nebulizing a solution of the compound(s) over the fungi; spraying the fungi with a solution of the compound(s); administering the compound(s) in the water used for watering the fungi; or bringing a volatile form of the compound(s) into the vicinity of the fungus.

In principle the treatment according to the invention can take place with any suitable concentration of one or more of the compounds. It has been found especially favourable, however, if the fungi are treated with a concentration of the compound(s) which lies In the range from 0.1 to 400, preferably 2-200 mmol/l, even more preferably from 100 to 200 mmol/l.

All edible fungi can be used as the fungi to be treated. Especially favourable results, however, are obtained in the fungi which are chosen from the species: *Agaricus arvensis, Agaricus bitorquis* and *Agaricus campestris,* in particular *Agaricus bisporus.*

In another aspect the present invention relates to an edible fungus, in particular mushroom, which is treated by a method according to one of the preceding claims.

In a further aspect the present invention relates to a fungus package where the latter is provided with a source of one or more compounds chosen from: cyclopentylacetic acid (I), 2-cyclopentene-1-acetic acid (II), methyl-2-cyclopentene-1-acetic add (III), isopropylcyclopentene-1-acetate (IV), ethyl-2-oxocyclopentane-carboxylate (V), methylcyclopentylideneacetate (VI), an isomeric mixture (VII) of cyclopentylideneacetic add (VI-Ia) and 1-cyclopentene-1-aceticacid (VIIb), methyl-2-cyclohexene-1-acetate (VIII), or a combination thereof.

The fungus package is preferably provided with a source of one or more compounds chosen from methylcyclopentylideneacetate (VI) and methyl-2-cyclohexene-1-acetate (VIII), or a combination thereof.

In yet another aspect the present invention relates to the use of a solution of one or more compounds which are chosen from the group which consists of: cyclopentylacetic acid (I), 2-cyclopentene-1-acetic acid (II), methyl-2-cyclopentene-1-acetic acid (III), isopropylcyclopentene-1-acetate, ethyl-2-oxocyclopentanecarboxylate (V), methylcyclopentylideneacetate (VI), an isomeric mixture (VII) of cyclopentylideneacetic acid (VIIa) and 1-cyclopentene-1-acetic acid (VIIb), methyl-2-cyclohexene-1-acetate (VIII), or a combination thereof, in particular methylcyclopentylideneacetate (VI) and methyl-2-cyclohexene-1-acetate (VIII), or a combination thereof for inhibiting cap opening in edible fungi.

The present invention will now be explained by means of non-limiting examples.

### EXAMPLES

### Example 1

Ten freshly cut mushrooms *(Agaricus bisporus;* about 200 g) were placed with the stems underneath in a petri dish with in each case 10 ml of a solution of one of the compounds used according to the invention (13.3 mol/l) for inhibiting cap opening and browning. The solution also contained water, Tween 20 emulsifier (0.01%) and sodium chloride (0.03%). The solution was completely absorbed by the mushrooms. The mushrooms were kept under standard storage conditions (in a closed box at 5°C).

The occurrence of cap opening and browning was evaluated for 7 days. The evaluation was carried out by comparing with a comparison solution which only contained the water, Tween 20 and sodium chloride, but in other respects under the same conditions. For evaluation tests which are customary in the art, such as measurement of the relative cap opening, reference is made to *inter alia* J.B.W. Hammond and R. Nichols, J. Gen. Microbiol. (1976) 93: 309-320.

The results are given below for the active compounds used for inhibiting cap opening and browning:
Cyclopentylacetic acid (I) - During the first 2 days no significant differences were observed relative to the comparison solution, but after 7 days the caps of the untreated mushrooms were completely open, whereas the caps of the treated mushrooms showed less than 80% cap opening. No browning was observed in the case of the treated mushrooms.
2-cyclopentene-1-acetic acid (II) - During the first 2 days no significant differences were observed relative to the comparison solution, but after 7 days the caps of the mushrooms treated with comparison solution (hereinafter called "untreated") were completely open, whereas the caps of the mushrooms treated with the solution containing the active compound (hereinafter called "treated") remained closed. Only slight browning was observed in the case of the treated mushrooms, whereas the untreated mushrooms showed a high degree of browning.
Methyl-2-cyclopentene-1-acetic acid (III) - During the first 2 days no significant differences were observed relative to the comparison solution, but after 7 days the caps of the untreated mushrooms were completely open, whereas the caps of the treated mushrooms showed less than 25% cap opening. No browning was observed in the case of the treated mushrooms.
Isopropyl-2-cyclopentene-1-acetate (IV) - During the first 2 days no significant differences were observed relative to the comparison solution, but after 7 days the caps of the untreated mushrooms were completely open, whereas the caps of the treated mushrooms showed less than 15% cap opening. Only slight browning was observed in the case of the treated mushrooms.
Ethyl-2-oxocyclopentanecarboxylate (V) - During the first 2 days no significant differences were observed relative to the comparison solution, but after 7 days the caps of the untreated mushrooms were completely open, whereas the caps of the treated mushrooms in some cases showed less good opening. No browning was observed in the case of the treated mushrooms.
Methylcyclopentylideneacetate (VI) - During the first 2 days no significant differences were observed relative to the comparison solution, but after 7 days the caps of the untreated mushrooms were completely open, whereas the caps of the treated mushrooms remained completely closed. No browning was observed in the case of the treated mushrooms.
An isomeric mixture (VII) of cyclopentylideneacetic acid (VII) and a cyclopenteneacetic acid (VIIb) - During the first two days no significant differences were observed relative to the comparison solution, but after 7 days the caps of the untreated mushrooms were completely open, whereas the caps of the treated mushrooms mainly remained closed. A slight degree of browning was observed in the case of the treated mushrooms.
Methyl-2-cyclohexene-1-acetate (VIII) - During the first 2 days no significant differences were observed relative to the comparison solution, but after 7 days the caps of the untreated mushrooms were completely open, whereas the caps of the treated mushrooms remained completely closed. No browning was observed in the case of the treated mushrooms.

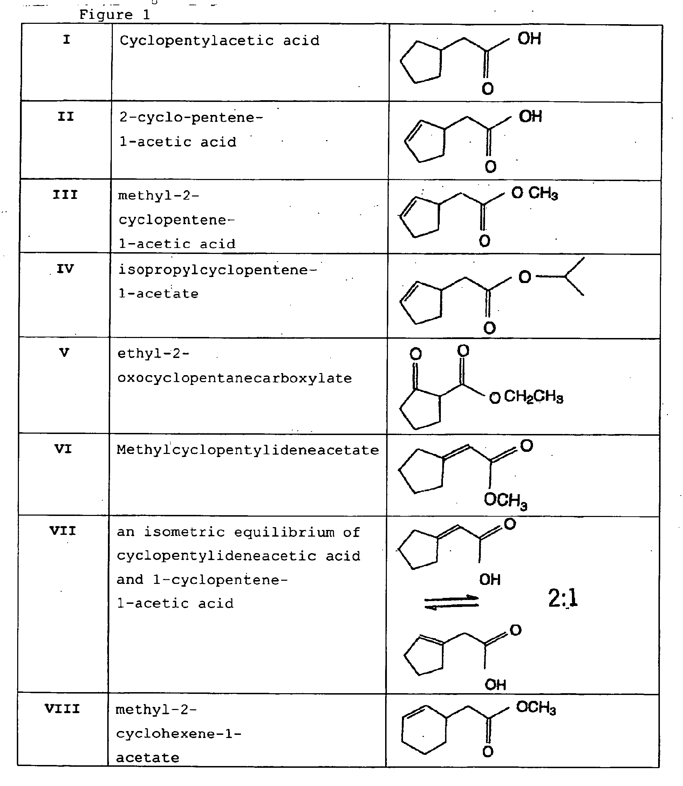

The structures of the compounds used, as well as those of the remaining compounds according to the invention, are shown in Fig. 1.

### Example 2

The same evaluation tests as in Example 1 were repeated by exposing freshly cut mushrooms (*Agaricus bisporus*) to mists of the solutions used in Example 1 and by exposing the mushrooms, prior to cutting them, to the solutions used by adding the solutions to the cultivation bed. Comparable results were obtained.

As is apparent from the above-mentioned Examples, the compounds used according to the invention provide favourable inhibition of cap opening and browning in mushrooms. Note in particular the very favourable inhibitory effect of methylcyclopentylideneacetate (VI) and methyl-2-cyclohexene-1-acetate (VIII).

The compounds I, II and VIII are commercially available.

The person skilled in the art will quickly understand that the invention can be varied in many ways, without departing from the scope of the invention.

## Claims

1. Method for inhibiting cap opening and/or browning in edible fungi, in particular in mushrooms, the method involving the treatment of the fungi with one or more compounds chosen from the group which consists of: cyclopentylacetic acid (I), 2-cyclopentene-1-acetic acid (II), methyl-2-cyclopentene-1-acetic acid (III), isopropylcyclopentene-1-acetate (IV), ethyl-2-oxocyclopentanecarboxylate (V), methylcyclopentylideneacetate (VI), an isomeric mixture (VII) of cyclopentylideneacetic acid (VIIa) and 1-cyclopentene-1-acetic acid (VIIb), methyl-2-cyclohexene-1-acetate (VIII), or a combination thereof.

2. Method according to claim 1, in which the compound is chosen from methylcyclopentylideneacetate (VI) and methyl-2-cyclohexene-1-acetate (VIII), or a combination thereof.

3. Method according to claim 1 or 2, in which the treatmenttakes place by: nebulizing a solution of the compound(s) over the fungi; spraying the fungi with a solution of the compound(s); administering the compound(s) in the water used for watering the fungi; or bringing a volatile form of the compound(s) into the vicinity of the fungus.

4. Method according to one of the preceding claims, in which the fungi are treated with a concentration of the compound(s) which lies in the range from 0.1 to 400, preferably 2-200 mmol/l, even more preferably from 100 to 200 mmol/l.

5. Method according to one of the preceding claims, in which the fungi are chosen from the species: Agaricus arvensis, Agaricus bitorquis and Agaricus campestris, in particular Agaricus bisporus.

6. Edible fungus, in particular mushroom, treated by the method according to one of the preceding claims.

7. Fungus package where the latter is provided with a source of one or more compounds chosen from: cyclopentylacetic acid (I), 2-cyclopentene-1-acetic acid (II), methyl-2-cyclopentene-1-acetic acid (III), isopropylcyclopentene-1-acetate (IV), ethyl-2-oxocy-clopentanecarboxylate (V), methylcyclopentylideneacetate (VI), an isomeric mixture (VII) of cyclopentylideneacetic acid (VIIa) and 1-cyclopentene-1-acetic acid (VIIb), methyl-2-cyclohexene-1-acetate (VIII), or a combination thereof.

8. Fungus package according to claim 7, where the latter is provided with a source of one or more compounds chosen from methylcyclopentylideneacetate (VI) and methyl-2-cyclohexene-1-acetate (VIII), or a combination thereof.

9. Use of a solution of one or more compounds chosen from the group which consists of: cyclopentylacetic acid (I), 2-cyclopentene-1-acetic acid (II), methyl-2-cyclopentene-1-acetic acid (III), isopropylcyclopentene-1-acetate (IV), ethyl-2-oxocyclopentanecarboxylate (V), methylcyclopentylideneacetate (VI), an isomeric mixture (VII) of cyclopentylideneacetic acid (VIIa) and 1-cyclopentene-1-acetic acid (VIIb), methyl-2-cyclohexene-1-acetate (VIII), or a combination thereof, in particular methylcyclopentylideneacetate (VI) and methyl-2-cyclohexene-1-acetate (VI-II), or a combination thereof for inhibiting cap opening in edible fungi.

## Patentansprüche

1. Verfahren zur Hemmung der Hutöffnung und/oder der Bräunung von essbaren Pilzen, insbesondere von Champignons, wobei das Verfahren das Behandeln der Pilze mit einer oder mehreren Verbindungen ausgewählt aus Cyclopentylessigsäure (I), 2-Cyclopenten-1-essigsäure (II), Methyl-2-cyclopenten-1-essigsäure (III), Isopropylcyclopenten-1-acetat (IV), Ethyl-2-oxocyclopentancarboxylat (V), Methylcyclopentylidenacetat (VI), einem isomeren Gemisch (VII) von Cyclopentylidenessigsäure (VIIa) und 1-Cyclopenten-1-essigsäure (VIIb), Methyl-2-cyclohexen-1-acetat (VIII) oder einer Kombination davon umfasst.

2. Verfahren gemäß Anspruch 1, wobei die Verbindung ausgewählt ist aus Methylcyclopentylidenacetat (VI) und Methyl-2-cyclohexen-1-acetat (VIII) oder einer Kombination davon.

3. Verfahren gemäß Anspruch 1 oder 2, in dem das Behandeln stattfindet durch: Zerstäuben einer Lösung der Verbindung(en) über die Pilze; Besprühen der Pilze mit einer Lösung der Verbindung(en); Verabreichen der Verbindung(en) in dem Wasser, das zum Wässern der Pilze verwendet wird; oder Bringen einer flüchtigen Form der Verbindung(en) in die Nähe des Pilzes.

4. Verfahren gemäß einem der vorstehenden Ansprüche, wobei die Pilze mit einer Konzentration der Verbindung(en) behandelt werden, welche im Bereich von 0,1 bis 400, vorzugsweise 2-200 mmol/l, stärker bevorzugt von 100 bis 200 mmol/l liegt.

5. Verfahren gemäß einem der vorstehenden Ansprüche, wobei die Pilze aus den Spezies Agaricus arvensis, Agaricus bitorquis und Agaricus campestris ausgewählt sind, insbesondere Agaricus bisporus.

6. Essbarer Pilz, insbesondere Champignon, der mit dem Verfahren gemäß einem der vorstehenden Ansprüche behandelt ist.

7. Pilzverpackung, die mit einer Quelle von einer oder mehreren Verbindungen ausgewählt aus Cyclopentylessigsäure (I), 2-Cyclopenten-1-essigsäure (II), Methyl-2-cyclopenten-1-essigsäure (III), Isopropylcyclopenten-1-acetat (IV), Ethyl-2-oxocyclopentancarboxylat (V), Methylcyclopentylidenacetat (VI), einem isomeren Gemisch (VII) von Cyclopentylidenessigsäure (VIIa) und 1-Cyclopenten-1-essigsäure (VIIb), Methyl-2-cyclohexen-1-acetat (VIII) oder einer Kombination davon ausgestattet ist.

8. Pilzverpackung gemäß Anspruch 7, die mit einer Quelle von einer oder mehreren Verbindungen ausgewählt aus Methylcyclopentylidenacetat (VI) und Methyl-2-cyclohexen-1-acetat (VIII) oder einer Kombination davon ausgestattet ist.

9. Verwendung einer Lösung von einer oder mehreren Verbindungen ausgewählt aus Cyclopentylessigsäure (I), 2-Cyclopenten-1-essigsäure (II), Methyl-2-cyclopenten-1-essigsäure (III), Isopropylcyclopenten-1-acetat (IV), Ethyl-2-oxocyclopentancarboxylat (V), Methylcyclopentylidenacetat (VI), einem isomeren Gemisch (VII) von Cyclopentylidenessigsäure (VIIa) und 1-Cyclopenten-1-essigsäure (VIIb), Methyl-2-cyclohexen-1-acetat (VIII) oder einer Kombination davon, insbesondere Methylcyclopentylidenacetat (VI) und Methyl-2-cyclohexen-1-acetat (VIII) oder einer Kombination davon, zur Hemmung der Hutöffnung von essbaren Pilzen.

## Revendications

1. Procédé d'inhibition d'ouverture de chapeau et/ou de brunissement de mycètes comestibles, en particulier de champignons, le procédé impliquant le traitement des mycètes avec un ou plusieurs composés choisis dans le groupe qui consiste en : l'acide cyclopentyl-acétique (I), l'acide 2-cyclopentène-1-acétique (II), l'acide méthyl-2-cyclopentène-1-acétique (III), l'isopropylcyclopentène-1-acétate (IV), l'éthyl-2-oxocyclopentane-carboxylate (V), le méthylcyclopentylidène-acétate (VI), un mélange isomérique (VII) d'acide cyclopentylidène-acétique (VIIa) et d'acide 1-cyclopentène-1-acétique (VIIb), le méthyl-2-cyclohexène-1-acétate (VIII), ou une combinaison de ceux-ci.

2. Procédé selon la revendication 1, dans lequel le composé est choisi parmi le méthylcyclopentylidène-acétate (VI) et le méthyl-2-cyclohexène-1-acétate (VIII), ou une combinaison de ceux-ci.

3. Procédé selon la revendication 1 ou 2, dans lequel le traitement se déroule : en nébulisant une solution du/des composé(s) sur les mycètes ; en pulvérisant les mycètes avec une solution du/des composé(s) ; en administrant le(s) composé(s) dans l'eau utilisée pour arroser les mycètes ; ou en plaçant une forme volatile du/des composé(s) à proximité du mycète.

4. Procédé selon l'une des revendications précédentes, dans lequel les mycètes sont traitées avec une concentration du/des composé(s) qui se situe dans la gamme de 0,1 à 400, de préférence 2-200 mmol/l, mieux de 100 à 200 mmol/l.

5. Procédé selon l'une des revendications précédentes, dans lequel les mycètes sont choisies parmi les espèces : *Agaricus arvensis, Agaricus bitorquis* et *Agaricus campestris,* en particulier *Agaricus bisporus.*

6. Mycète comestible, en particulier un champignon, traité par le procédé selon l'une des revendications précédentes.

7. Conditionnement pour mycète, pourvu d'une source d'un ou plusieurs composés choisis parmi : l'acide cyclopentyl-acétique (I), l'acide 2-cyclopentène-1-acétique (II), l'acide méthyl-2-cyclopentène-1-acétique (III), l'isopropylcyclopentène-1-acétate (IV), l'éthyl-2-oxocyclopentane-carboxylate (V), le méthylcyclopentylidène-acétate (VI), un mélange isomérique (VII) d'acide cyclopentylidène-acétique (VIIa) et d'acide 1-cyclopentène-1-acétique (VIIb), le méthyl-2-cyclohexène-1-acétate (VIII), ou une combinaison de ceux-ci.

8. Conditionnement pour mycète selon la revendication 7, pourvu d'une source d'un ou plusieurs composés choisis parmi le méthylcyclopentylidène-acétate (VI) et le méthyl-2-cyclohexène-1-acétate (VIII), ou une combinaison de ceux-ci.

9. Utilisation d'une solution d'un ou plusieurs composés choisis dans le groupe qui consiste en : l'acide cyclopentyl-acétique (I), l'acide 2-cyclopentène-1-acétique (II), l'acide méthyl-2-cyclopentène-1-acétique (III), l'isopropylcyclopentène-1-acétate (IV), l'éthyl-2-oxocyclopentane-carboxylate (V), le méthylcyclopentylidène-acétate (VI), un mélange isomérique (VII) d'acide cyclopentylidène-acétique (VIIa) et d'acide 1-cyclopentène-1-acétique (VIIb), le méthyl-2-cyclohexène-1-acétate (VIII), ou une combinaison de ceux-ci, en particulier le méthylcyclopentylidène-acétate (VI) et le méthyl-2-cyclohexène-1-acétate (VIII), ou une combinaison de ceux-ci, pour inhiber l'ouverture de chapeau de mycètes comestibles.
